# EUROPEAN PATENT APPLICATION

(11) **EP 4 707 885 A1**
(43) Date of publication of application: **11.03.2026**
(21) Application number: 25150596.2
(22) Date of filing: 08.01.2025
(51) Int. Cl.: G02B 6/126, G02B 6/27, G02B 6/28, G02B 6/12

(54) **POLARIZATION SPLITTERS FOR A PHOTONIC CHIP**

(30) Priority: 10.09.2024 US 202418829769
(71) Applicant: GlobalFoundries U.S. Inc., Malta, NY 12020 (US)
(72) Inventor: BIAN, Yusheng, Malta, NY, 12020 (US)
(74) Representative: Lambacher, Michael

(57) **Abstract**

Structures for a polarization splitter and methods of forming such structures. The structure comprises a multimode interference structure including a first multimode interference region, a second multimode interference region, a first waveguide core adjoined to a first portion of the first multimode interference region at a first acute angle, a second waveguide core adjoined to a second portion of the first multimode interference region at a second acute angle, and a third waveguide core adjoined to a third portion of the first multimode interference region. The second multimode interference region has an overlapping relationship with the first multimode interference region.

## Description

### BACKGROUND

This disclosure relates to photonic chips and, more specifically, to structures for a polarization splitter and methods of forming such structures.

Photonic chips are used in many applications and systems including, but not limited to, data communication systems and data computation systems. A photonic chip includes a photonic integrated circuit comprised of interconnected photonic components, such as modulators, polarizers, and couplers, that are used to manipulate light received from a light source, such as an optical fiber or a laser.

Polarization splitters are a type of optical component commonly found in photonic chips. A polarization splitter may be configured to receive optical signals with multiple polarization states as input and to split the optical signals such that the different polarization states exit the polarization splitter from different outputs. Conventional polarization splitters may have a large footprint and may exhibit a high loss.

Improved structures for a polarization splitter and methods of forming such structures are needed.

### SUMMARY

In an embodiment of the invention, a structure for a polarization splitter is provided. The structure comprises a multimode interference structure including a first multimode interference region, a second multimode interference region, a first waveguide core adjoined to a first portion of the first multimode interference region at a first acute angle, a second waveguide core adjoined to a second portion of the first multimode interference region at a second acute angle, and a third waveguide core adjoined to a third portion of the first multimode interference region. The second multimode interference region has an overlapping relationship with the first multimode interference region.

The third portion of the first multimode interference region may be a tapered section.

Further, the first multimode interference region may have a first sidewall; the first waveguide core may adjoin the first portion of the first multimode interference region at the first sidewall, the second waveguide core may adjoin the second portion of the first multimode interference region at the first sidewall, and the second waveguide core may be spaced along the first sidewall from the first waveguide core.

Further, the first multimode interference region may have a second sidewall opposite from the first sidewall, and the multimode interference structure may include a fourth waveguide core adjoined to a first portion of the second sidewall at a third acute angle and a fifth waveguide core adjoined to a second portion of the second sidewall at a fourth acute angle, and the fifth waveguide core may be spaced along the second sidewall from the fourth waveguide core.

Further, the multimode interference structure may include a sixth waveguide core adjoined to a first portion of the second multimode interference region at a fifth acute angle and a seventh waveguide core adjoined to a second portion of the second multimode interference region at a sixth acute angle, the sixth waveguide core having an overlapping relationship with the fourth waveguide core, and the seventh waveguide core having an overlapping relationship with the fifth waveguide core.

According to another variant, the multimode interference structure may include a fourth waveguide core adjoined to a first portion of the second multimode interference region (at a third acute angle) and a fifth waveguide core adjoined to a second portion of the second multimode interference region (at a fourth acute angle); the fourth waveguide core may have an overlapping relationship with the first waveguide core, and the fifth waveguide core may have an overlapping relationship with the second waveguide core.

Further, the second multimode interference region may have a sidewall, the fourth waveguide core may adjoin the first portion of the second multimode interference region at the sidewall, the fifth waveguide core may adjoin the second portion of the second multimode interference region at the sidewall, and the fourth waveguide core may be spaced along the sidewall from the fifth waveguide core.

Independent of the above-mentioned variants, the first multimode interference region may comprise a first material, and the second multimode interference region may comprise a second material different from the first material. For instance, the first multimode interference region may comprise silicon, and the second multimode interference region may comprise silicon nitride.

Further, the structure may further comprise a semiconductor substrate; a first dielectric layer on the semiconductor substrate; and a second dielectric layer on the first dielectric layer; the first dielectric layer and the second dielectric layer may be positioned between the second multimode interference region and the semiconductor substrate; further, the second dielectric layer may be positioned between the first multimode interference region and the second multimode interference region.

Further, the second multimode interference region may include a longitudinal axis and a plurality of segments that may be arranged along the longitudinal axis; additionally or alternatively, the first multimode interference region may include a first longitudinal axis, and the second multimode interference region may include a second longitudinal axis that is oriented parallel to the first longitudinal axis.

Further, the second multimode interference region may include a first subregion and a second subregion, and the first subregion may be angled at a third acute angle relative to the second subregion. Further, the first multimode interference region may include a third subregion and a fourth subregion, and the third subregion may be angled at a fourth acute angle relative to the second subregion; the first subregion may overlap with the third subregion, and the second subregion may overlap with the fourth subregion; optionally, the fourth acute angle may be equal to the third acute angle.

Further, the first multimode interference region and the second multimode interference region may be configured to split polarized light according to polarization mode.

In an embodiment of the invention, a method of forming a structure for a polarization splitter is provided. The method comprises forming a multimode interference structure including a first multimode interference region, a second multimode interference region, a first waveguide core adjoined to a first portion of the first multimode interference region at a first acute angle, a second waveguide core adjoined to a second portion of the first multimode interference region at a second acute angle, and a third waveguide core adjoined to a third portion of the first multimode interference region. The second multimode interference region has an overlapping relationship with the first multimode interference region.

### BRIEF DESCRIPTION OF THE DRAWINGS

The accompanying drawings, which are incorporated in and constitute a part of this specification, illustrate various embodiments of the invention and, together with a general description of the invention given above and the detailed description of the embodiments given below, serve to explain the embodiments of the invention. In the drawings, like reference numerals refer to like features in the various views.
FIG. 1 is a top view of a structure at an initial fabrication stage of a processing method in accordance with embodiments of the invention.
FIG. 2 is a cross-sectional view taken generally along line 2-2 in FIG. 1.
FIG. 2A is a cross-sectional view taken generally along line 2A-2A in FIG. 1.
FIG. 3 is a top view of the structure at a fabrication stage of the processing method subsequent to FIGS. 1, 2, 2A.
FIG. 4 is a cross-sectional view taken generally along line 4-4 in FIG. 3.
FIG. 4A is a cross-sectional view taken generally along line 4A-4A in FIG. 3.
FIGS. 5, 5A are cross-sectional views of the structure at a fabrication stage of the processing method subsequent to FIGS. 3, 4, 4A.
FIG. 6 is a top view of a structure at an initial fabrication stage of a processing method in accordance with embodiments of the invention.
FIG. 7 is a top view of the structure at a fabrication stage of the processing method subsequent to FIG. 6.
FIG. 8 is a top view of a structure in accordance with alternative embodiments of the invention.
FIG. 9 is a top view of a structure in accordance with alternative embodiments of the invention.
FIG. 10 is a top view of a structure at an initial fabrication stage of a processing method in accordance with embodiments of the invention.
FIG. 11 is a top view of the structure at a fabrication stage of the processing method subsequent to FIG. 10.
FIGS. 12, 12A are cross-sectional views of a structure in accordance with alternative embodiments of the invention.

### DETAILED DESCRIPTION

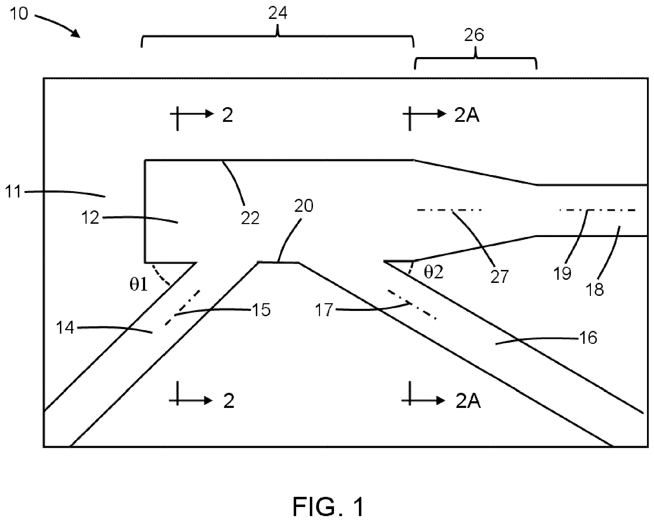

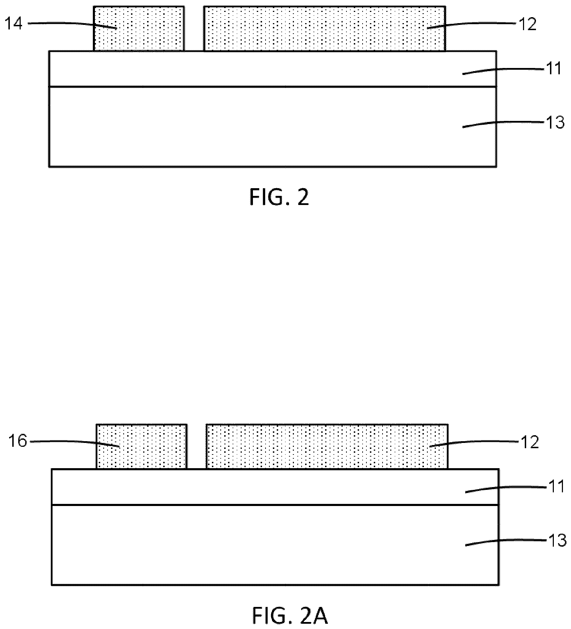

With reference to FIGS. 1, 2, 2A and in accordance with embodiments of the invention, an angled multimode interference structure 10 for a polarization splitter may include a multimode interference region 12 and waveguide cores 14, 16, 18. The multimode interference region 12 and waveguide cores 14, 16, 18 are positioned on, and above, a dielectric layer 11 and a semiconductor substrate 13. In an embodiment, the dielectric layer 11 may be comprised of a dielectric material, such as silicon dioxide, and the semiconductor substrate 13 may be comprised of a semiconductor material, such as single-crystal silicon. In an embodiment, the dielectric layer 11 may be a buried oxide layer of a silicon-on-insulator substrate, and the dielectric layer 11 may provide low-index cladding that separates the multimode interference region 12 and waveguide cores 14, 16, 18 from the semiconductor substrate 13.

The multimode interference region 12 includes a sidewall 20, a sidewall 22 opposite to the sidewall 20, a section 24, and a tapered section 26. The waveguide core 14 may be adjoined to a portion of the multimode interference region 12 at the sidewall 20, the waveguide core 16 may be adjoined to a portion of the multimode interference region 12 at the sidewall 20, and the waveguide core 18 may be adjoined to an end of the tapered section 26 of the multimode interference region 12. The section 24 may have a uniform width between the sidewalls 20, 22, and the tapered section 26 may be tapered with a width dimension that decreases with decreasing distance from the waveguide core 18. The multimode interference region 12 may have a longitudinal axis 27 along which the section 24 and the tapered section 26 are arranged.

The waveguide core 14 may be oriented at an acute angle relative to the sidewall 20 of the multimode interference region 12. In an embodiment, the waveguide core 14 may be aligned along a longitudinal axis 15 that is oriented at an acute angle θ1 relative to the sidewall 20 of the multimode interference region 12. The waveguide core 16 may be oriented at an acute angle relative to the sidewall 20 of the multimode interference region 12. In an embodiment, the waveguide core 16 may be aligned along a longitudinal axis 17 that is oriented at an acute angle θ2 relative to the sidewall 20 of the multimode interference region 12. The waveguide core 16 is spaced along the sidewall 20 from the waveguide core 14. The waveguide core 18 may be aligned along a longitudinal axis 19 that is collinear with the longitudinal axis 27 of the multimode interference region 12.

The connection of the waveguide core 14 to the sidewall 20 of the multimode interference region 12 may provide an input port for supplying polarized light to the multimode interference region 12. The connection of the waveguide core 16 to the sidewall 20 may provide an output port for light of a given polarization from the multimode interference region 12. The connection of the waveguide core 18 to the tapered section 26 may provide another output port of a different polarization from the multimode interference region 12.

In an embodiment, the multimode interference region 12 and the waveguide cores 14, 16, 18 may be comprised of a material having a refractive index that is greater than the refractive index of silicon dioxide. In an embodiment, the multimode interference region 12 and the waveguide cores 14, 16, 18 may be comprised of a semiconductor material. In an embodiment, the multimode interference region 12 and the waveguide cores 14, 16, 18 may be comprised of single-crystal silicon. In an embodiment, the multimode interference region 12 and the waveguide cores 14, 16, 18 may be comprised of polysilicon or amorphous silicon. The multimode interference region 12 and the waveguide cores 14, 16, 18 of the polarization splitter may be formed by patterning a layer comprised of their constituent material with lithography and etching processes. In an embodiment, the multimode interference region 12 and the waveguide cores 14, 16, 18 may be formed by patterning the semiconductor material (e.g., single-crystal silicon) of the device layer of a silicon-on-insulator substrate.

In an alternative embodiment, the multimode interference region 12 and the waveguide cores 14, 16, 18 may be comprised of a dielectric material, such as silicon nitride, silicon oxynitride, or aluminum nitride. In alternative embodiments, other materials, such as a III-V compound semiconductor, may be used to form the multimode interference region 12 and the waveguide cores 14, 16, 18. In an alternative embodiment, a thin slab layer may be connected to lower portions of the multimode interference region 12 and the waveguide cores 14, 16, 18.

The polarization splitter may have a different number of inputs and/or a different number of outputs than in the representative embodiment of the angled multimode interference structure 10. In an alternative embodiment, the semiconductor substrate 13 may include an undercut beneath all or part of the angled multimode interference structure 10.

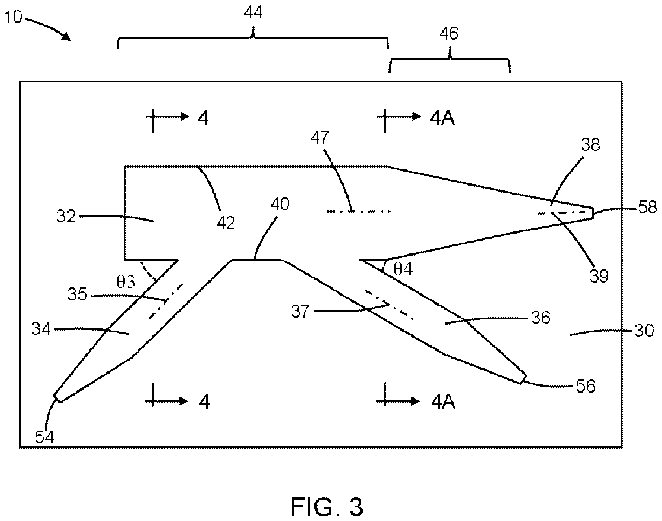

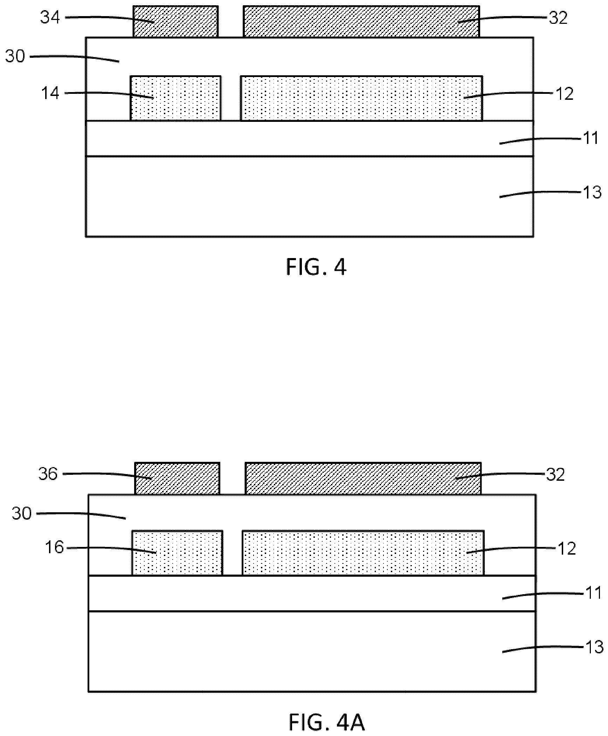

With reference to FIGS. 3, 4, 4A in which like reference numerals refer to like features in FIGS. 1, 2, 2A and at a subsequent fabrication stage, a dielectric layer 30 may be formed over the multimode interference region 12 and waveguide cores 14, 16, 18. The dielectric layer 30 may be comprised of a dielectric material, such as silicon dioxide, having a refractive index that is less than the refractive index of the material constituting the multimode interference region 12 and the waveguide cores 14, 16, 18.

The angled multimode interference structure 10 further includes a multimode interference region 32 and waveguide cores 34, 36 that are formed on the dielectric layer 30. The multimode interference region 32 is disposed over at least a portion of the multimode interference region 12 to define a stack of layers. The multimode interference region 32 may have an overlapping relationship with at least a portion of multimode interference region 12. The waveguide core 34 is disposed over at least a portion of the waveguide core 14 to define a layer stack and has an overlapping relationship with at least a portion of waveguide core 14. The waveguide core 36 is disposed over at least a portion of the waveguide core 16 to define a layer stack and has an overlapping relationship with at least a portion of the waveguide core 16. The waveguide core 38 is disposed over at least a portion of the waveguide core 38 to define a layer stack and has an overlapping relationship with at least a portion of the waveguide core 38.

In an embodiment, the multimode interference region 32 may be smaller in area, from a vertical perspective, than the multimode interference region 12 such that the multimode interference region 32 partially overlaps with the multimode interference region 12. In an embodiment, the multimode interference region 32 may be larger in area, from a vertical perspective, than the multimode interference region 12 such that the multimode interference region 32 fully overlaps with the multimode interference region 12. In an embodiment, the waveguide cores 34, 36, 38 may be narrower, from a vertical perspective, than the waveguide cores 14, 16, 18. In an embodiment, the waveguide cores 34, 36, 38 may be wider, from a vertical perspective, than the waveguide cores 14, 16, 18.

The multimode interference region 32 includes a sidewall 40, a sidewall 42 opposite to the sidewall 40, a section 44, and a tapered section 46. The waveguide core 34 may be adjoined to a portion of the multimode interference region 32 at the sidewall 40 directly over the connection of the waveguide core 14 to the sidewall 20 of the multimode interference region 12. The waveguide core 36 may be adjoined to a portion of the multimode interference region 32 at the sidewall 40 directly over the connection of the waveguide core 16 to the sidewall 22 of the multimode interference region 12. The waveguide core 38 may be adjoined to an end of the tapered section 46 of the multimode interference region 32. The multimode interference region 32 may have a longitudinal axis 47 along which the section 44 and the tapered section 26 are arranged. The longitudinal axis 47 may be oriented parallel to the longitudinal axis 27 of the multimode interference region 12.

The waveguide core 34 may be oriented at an acute angle relative to the sidewall 40 of the multimode interference region 32 and may be truncated at an end 54. In an embodiment, the waveguide core 34 may be aligned along a longitudinal axis 35 that is oriented at an acute angle θ3 relative to the sidewall 40 of the multimode interference region 32. In an embodiment, the acute angle θ3 at which the waveguide core 34 is oriented may be equal to the acute angle θ1 at which the waveguide core 14 is oriented.

The waveguide core 36 may be oriented at an acute angle relative to the sidewall 40 of the multimode interference region 32 and may be truncated at an end 56. In an embodiment, the waveguide core 36 may be aligned along a longitudinal axis 37 that is oriented at an acute angle θ4 relative to the sidewall 40 of the multimode interference region 32. In an embodiment, the acute angle θ4 at which the waveguide core 36 is oriented may be equal to the acute angle θ2 at which the waveguide core 16 is oriented.

The waveguide core 38 may be aligned along a longitudinal axis 39 that is collinear with the longitudinal axis 47 of the multimode interference region 32 and may be truncated at an end 58. The section 44 may have a uniform width, and the tapered section 46 may be tapered with a width dimension that decreases with decreasing distance from the waveguide core 38.

In an embodiment, the multimode interference region 32 and the waveguide cores 34, 36, 38 may be comprised of a material having a refractive index that is greater than the refractive index of silicon dioxide. In an embodiment, the multimode interference region 32 and the waveguide cores 34, 36, 38 may be comprised of a different material from the multimode interference region 12 and the waveguide cores 14, 16, 18. In an embodiment, the multimode interference region 32 and the waveguide cores 34, 36, 38 may be comprised of a material having a different refractive index than the multimode interference region 12 and the waveguide cores 14, 16, 18. In an embodiment, the multimode interference region 32 and the waveguide cores 34, 36, 38 may be comprised of a dielectric material, such as silicon nitride, silicon oxynitride, or aluminum nitride. The multimode interference region 32 and the waveguide cores 34, 36, 38 may be formed by depositing a layer comprised of their constituent material and patterning the deposited layer with lithography and etching processes.

In an alternative embodiment, the multimode interference region 32 and the waveguide cores 34, 36, 38 may be comprised of a semiconductor material, such as polysilicon or amorphous silicon. In alternative embodiments, other materials, such as a III-V compound semiconductor, thin-film lithium niobate, or barium titanate, may be used to form the multimode interference region 32 and the waveguide cores 34, 36, 38. In an alternative embodiment, a thin slab layer may be connected to lower portions of the multimode interference region 32 and the waveguide cores 34, 36, 38.

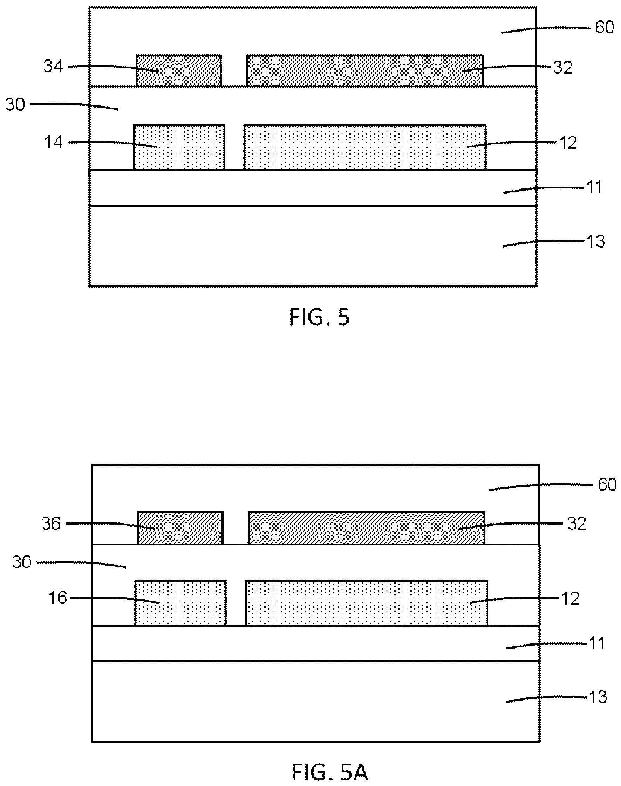

With reference to FIGS. 5, 5A in which like reference numerals refer to like features in FIGS. 3, 4, 4A and at a subsequent fabrication stage, a dielectric layer 60 may be formed over the multimode interference region 32 and the waveguide cores 34, 36, 38. The dielectric layer 60 may be comprised of a dielectric material, such as silicon dioxide, having a refractive index that is less than the refractive index of the material constituting the multimode interference region 32 and the waveguide cores 34, 36, 38.

In use, light (e.g., laser light) propagates in the waveguide core 14 toward the multimode interference region 12 and is directed into the multimode interference region 12. The light may be characterized multiple polarization modes, such as a combination of transverse magnetic mode and transverse electric mode. The multimode interference region 12 and the multimode interference region 32 cooperate to direct light characterized by one of the polarization modes, such as the transverse electric mode, to the waveguide core 16 for output from the polarization splitter. The multimode interference region 12 and the multimode interference region 32 cooperate to direct light characterized by a different polarization mode, such as the transverse magnetic mode, to the waveguide core 18 for output from the polarization splitter.

The presence of the multimode interference region 32, which is disposed over the multimode interference region 12, may function to increase the difference in effective refractive index between light characterized by different polarization modes. For example, the stacked multimode interference regions 12, 32 may cooperate to increase the difference in effective refractive index between light characterized by the transverse electric mode and light characterized by the transverse magnetic mode. The increased difference in effective refractive index may lead to more efficient polarization splitting and may also permit a reduction in the footprint of the polarization splitter. The waveguide cores 34, 36, 38, which are respectively disposed over the waveguide cores 14, 16, 18, may also assist with an increase in the efficiency of polarization splitting and the reduction in the footprint of the polarization splitter.

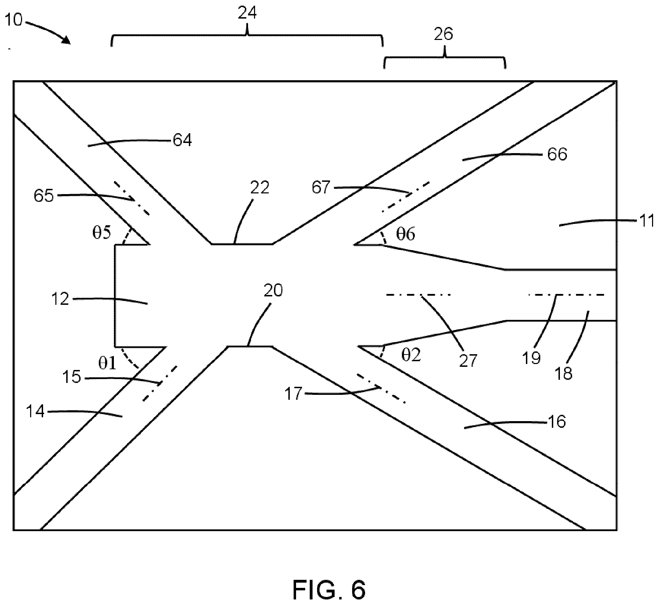

With reference to FIG. 6 and in accordance with alternative embodiments, the angled multimode interference structure 10 may further include a waveguide core 64 and a waveguide core 66 in addition to the waveguide cores 14, 16, 18. The waveguide core 64 may be adjoined to a portion of the multimode interference region 12 at the sidewall 22, and the waveguide core 66 may be adjoined to a portion of the multimode interference region 12 at the sidewall 22. The waveguide core 64 may be oriented at an acute angle relative to the sidewall 22 of the multimode interference region 12. In an embodiment, the waveguide core 64 may be aligned along a longitudinal axis 65 that is oriented at an acute angle θ5 relative to the sidewall 20 of the multimode interference region 12. The waveguide core 66 may be oriented at an acute angle relative to the sidewall 22 of the multimode interference region 12. In an embodiment, the waveguide core 66 may be aligned along a longitudinal axis 67 that is oriented at an acute angle θ6 relative to the sidewall 22 of the multimode interference region 12. The waveguide core 66 is spaced along the sidewall 22 from the waveguide core 64.

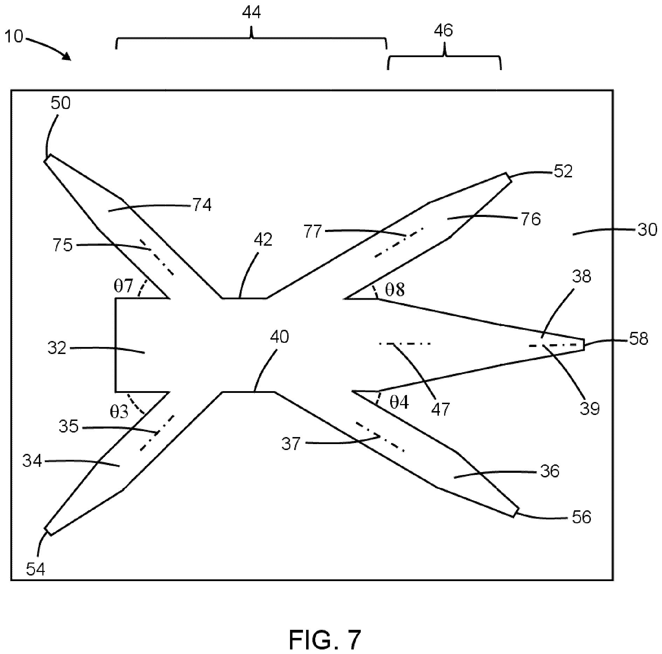

With reference to FIG. 7 in which like reference numerals refer to like features in FIG. 6 and at a subsequent fabrication stage, the angled multimode interference structure 10 may further include waveguide cores 74, 76 that are formed on the dielectric layer 30. The waveguide core 74 is disposed over at least a portion of the waveguide core 64 to define a layer stack and has an overlapping relationship with at least a portion of waveguide core 64. The waveguide core 76 is disposed over at least a portion of the waveguide core 66 to define a layer stack and has an overlapping relationship with at least a portion of the waveguide core 66.

The waveguide core 74 may be adjoined to a portion of the multimode interference region 32 at the sidewall 42. The waveguide core 74 may be oriented at an acute angle relative to the sidewall 42 of the multimode interference region 32 and may be truncated at an end 50. In an embodiment, the waveguide core 74 may be aligned along a longitudinal axis 75 that is oriented at an acute angle θ7 relative to the sidewall 42 of the multimode interference region 32. In an embodiment, the acute angle θ7 at which the waveguide core 74 is oriented may be equal to the acute angle θ5 at which the waveguide core 64 is oriented.

The waveguide core 76 may be adjoined to a portion of the multimode interference region 32 at the sidewall 42. The waveguide core 76 may be oriented at an acute angle relative to the sidewall 42 of the multimode interference region 32 and may be truncated at an end 52. In an embodiment, the waveguide core 76 may be aligned along a longitudinal axis 77 that is oriented at an acute angle θ8 relative to the sidewall 42 of the multimode interference region 32. In an embodiment, the acute angle θ8 at which the waveguide core 76 is oriented may be equal to the acute angle θ6 at which the waveguide core 66 is oriented. The waveguide core 76 is spaced along the sidewall 42 from the waveguide core 74.

Light of multiple polarization modes may propagate in the waveguide core 14 and in the waveguide core 64 to the stacked multimode interference regions 12, 32. The addition of the waveguide core 64 supplies the angled multimode interference structure 10 with a pair of inputs, namely the waveguide core 14 and the waveguide core 64. The addition of the waveguide core 66 supplies the polarization splitter with a pair of outputs for light having a given polarization mode. For example, the stacked multimode interference regions 12, 32 may cooperate to output light with the transverse electric mode from the angled multimode interference structure 10 to the waveguide core 16 and to the waveguide core 66, as well as output light with the transverse electric mode from the angled multimode interference structure 10 to the waveguide core 18. The waveguide core 74 arranged to overlap with the waveguide core 64 may assist with light transfer, and the waveguide core 76 arranged to overlap with the waveguide core 66 may assist with light transfer.

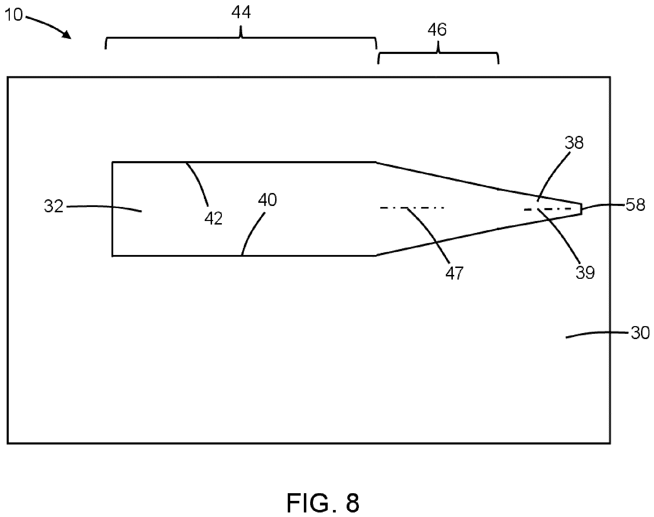

With reference to FIG. 8 and in accordance with alternative embodiments, the waveguide core 34 and waveguide core 36 may be omitted from the angled multimode interference structure 10. The stacked multimode interference regions 12, 32 maintain the ability to function to increase the difference in effective refractive index between light characterized by different polarization modes propagating in the waveguide core 14 to the angled multimode interference structure 10.

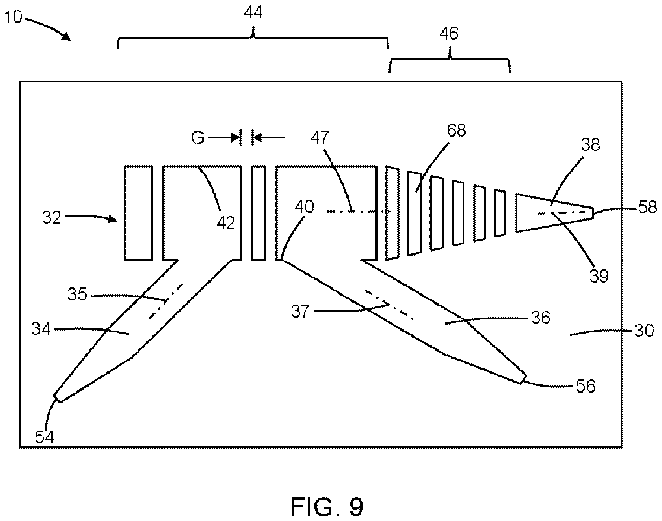

With reference to FIG. 9 and in accordance with alternative embodiments, the multimode interference region 32 of the angled multimode interference structure 10 may include segments 68 that are arranged along the longitudinal axis 47. Adjacent pairs of the segments 68 are separated by gaps G that are subsequently filled by the dielectric material of the dielectric layer 60. The waveguide core 14 and the waveguide core 16 may each adjoin one of the segments 68 along the sidewall 20. The segmentation of the multimode interference region 32 may function to further increase the difference in effective refractive index between light characterized by different polarization modes that is being split by the polarization splitter. In an alternative embodiment, one or more of the waveguide cores 14, 16, 18 may also be divided into segments.

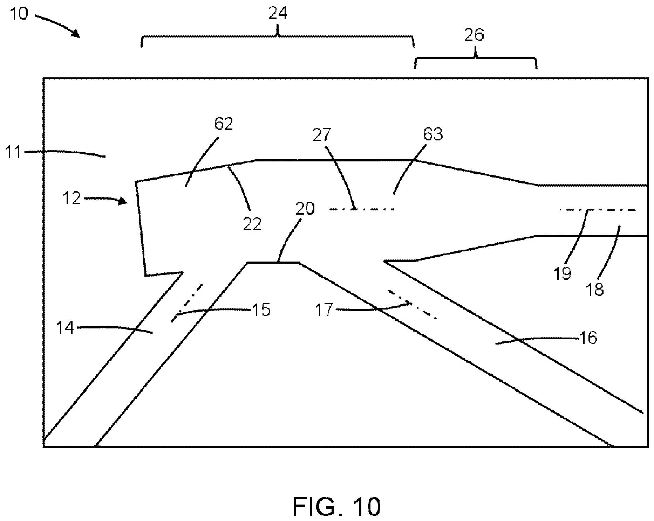

With reference to FIG. 10 and in accordance with alternative embodiments, the section 24 of the multimode interference region 12 of the angled multimode interference structure 10 may include a subregion 62 and a subregion 63 that is adjoined to the subregion 62. Then subregion 62 is angled at an acute angle relative to the subregion 63. More specifically, the longitudinal axis of the subregion 62 may be angled relative to the longitudinal axis 27 of the subregion 63. The angling of the subregions 62, 63 may provide flexibility in the selection of the acute angle of the waveguide core 14.

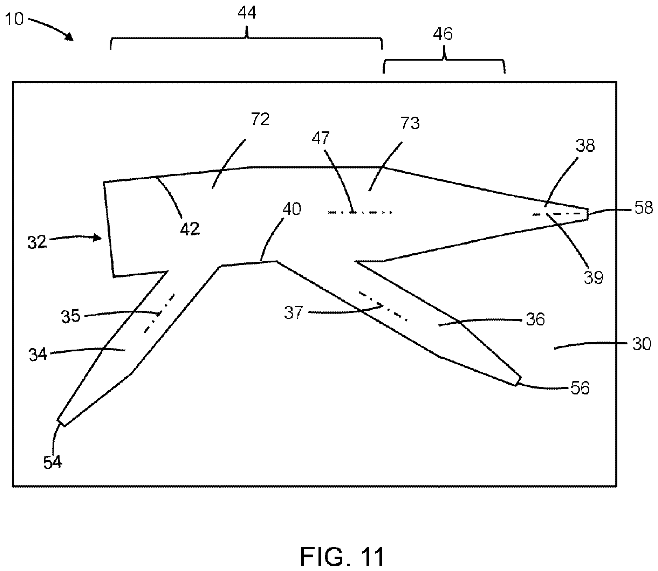

With reference to FIG. 11 in which like reference numerals refer to like features in FIG. 10 and at a subsequent fabrication stage, the section 24 of the multimode interference region 32 of the angled multimode interference structure 10 may include a subregion 72 and a subregion 73 that is adjoined to the subregion 72. The subregion 72, which has an overlapping relationship with the subregion 62, is angled at an acute angle relative to the subregion 73, which has an overlapping relationship with the subregion 63. More specifically, the longitudinal axis of the subregion 72 may be angled relative to the longitudinal axis 47 of the subregion 73. The angling of the subregion 72 relative to the subregion 73 may provide flexibility in the selection of the acute angle for the waveguide core 34 in order to match the flexibility in the angling of the waveguide core 14. In an embodiment, the acute angle associated with the subregions 72, 73 may be equal to the acute angle associated with the subregions 62, 63.

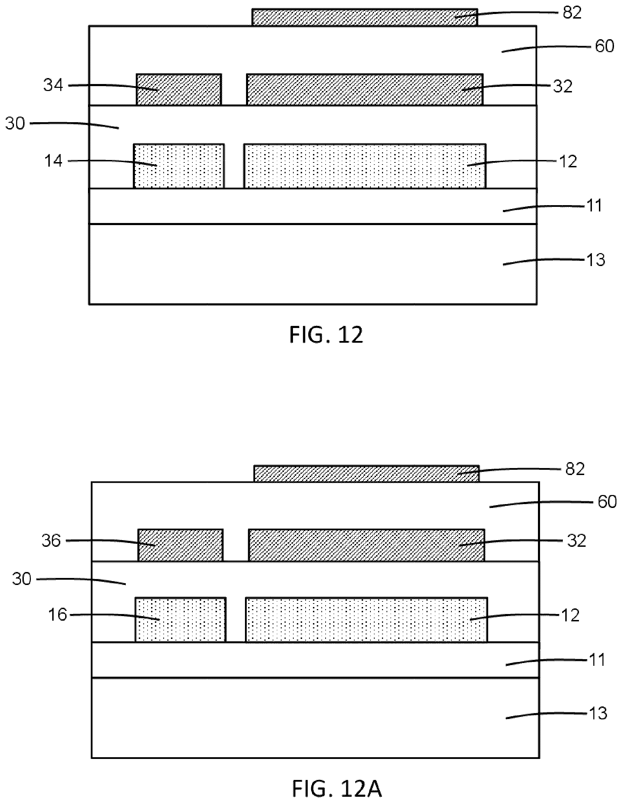

With reference to FIGS. 12, 12A and in accordance with alternative embodiments, the angled multimode interference structure 10 may include an additional multimode interference region 82 that is formed on the dielectric layer 60 over the multimode interference region 32. The multimode interference region 82 may fully overlap with the multimode interference region 32 or, alternatively, the multimode interference region 82 may partially overlap with the multimode interference region 32. The multimode interference region 82 may be comprised of the same material as the multimode interference region 32 or, alternatively, the multimode interference region 82 may be comprised of a different material than the multimode interference region 32. The addition of the additional multimode interference region 82 to the angled multimode interference structure 10 may function to further increase the difference in effective refractive index between light characterized by different polarization modes that is being split by the polarization splitter. In an alternative embodiment, one or more additional waveguide cores may also be formed over the waveguide cores 34, 36, 38.

The methods as described above are used in the fabrication of integrated circuit chips. The resulting integrated circuit chips can be distributed by the fabricator in raw wafer form (e.g., as a single wafer that has multiple unpackaged chips), as a bare die, or in a packaged form. The chip may be integrated with other chips, discrete circuit elements, and/or other signal processing devices as part of either an intermediate product or an end product. The end product can be any product that includes integrated circuit chips, such as computer products having a central processor or smartphones.

References herein to terms modified by language of approximation, such as "about", "approximately", and "substantially", are not to be limited to the precise value or precise condition as specified. In embodiments, language of approximation may indicate a range of +/-10% of the stated value(s) or the stated condition(s).

References herein to terms such as "vertical", "horizontal", etc. are made by way of example, and not by way of limitation, to establish a frame of reference. The term "horizontal" as used herein is defined as a plane parallel to a conventional plane of a semiconductor substrate, regardless of its actual three-dimensional spatial orientation. The terms "vertical" and "normal" refer to a direction in the frame of reference perpendicular to the horizontal plane, as just defined. The term "lateral" refers to a direction in the frame of reference within the horizontal plane.

A feature "connected" or "coupled" to or with another feature may be directly connected or coupled to or with the other feature or, instead, one or more intervening features may be present. A feature may be "directly connected" or "directly coupled" to or with another feature if intervening features are absent. A feature may be "indirectly connected" or "indirectly coupled" to or with another feature if at least one intervening feature is present. A feature "on" or "contacting" another feature may be directly on or in direct contact with the other feature or, instead, one or more intervening features may be present. A feature may be "directly on" or in "direct contact" with another feature if intervening features are absent. A feature may be "indirectly on" or in "indirect contact" with another feature if at least one intervening feature is present. Different features may "overlap" if a feature extends over, and covers a part of, another feature.

The descriptions of the various embodiments of the present invention have been presented for purposes of illustration but are not intended to be exhaustive or limited to the embodiments disclosed. Many modifications and variations will be apparent to those of ordinary skill in the art without departing from the scope and spirit of the described embodiments. The terminology used herein was chosen to best explain the principles of the embodiments, the practical application or technical improvement over technologies found in the marketplace, or to enable others of ordinary skill in the art to understand the embodiments disclosed herein.

## Claims

1. A structure for a polarization splitter, the structure comprising:
a multimode interference structure including a first multimode interference region, a second multimode interference region, a first waveguide core adjoined to a first portion of the first multimode interference region at a first acute angle, a second waveguide core adjoined to a second portion of the first multimode interference region at a second acute angle, and a third waveguide core adjoined to a third portion of the first multimode interference region, and the second multimode interference region having an overlapping relationship with the first multimode interference region.

2. The structure of claim 1 wherein the third portion of the first multimode interference region is a tapered section.

3. The structure of claim 1 or claim 2 wherein the first multimode interference region has a first sidewall, the first waveguide core adjoins the first portion of the first multimode interference region at the first sidewall, the second waveguide core adjoins the second portion of the first multimode interference region at the first sidewall, and the second waveguide core is spaced along the first sidewall from the first waveguide core.

4. The structure of claim 3 wherein the first multimode interference region has a second sidewall opposite from the first sidewall, and the multimode interference structure includes a fourth waveguide core adjoined to a first portion of the second sidewall at a third acute angle and a fifth waveguide core adjoined to a second portion of the second sidewall at a fourth acute angle, and the fifth waveguide core is spaced along the second sidewall from the fourth waveguide core.

5. The structure of claim 4 wherein the multimode interference structure includes a sixth waveguide core adjoined to a first portion of the second multimode interference region at a fifth acute angle and a seventh waveguide core adjoined to a second portion of the second multimode interference region at a sixth acute angle, the sixth waveguide core having an overlapping relationship with the fourth waveguide core, and the seventh waveguide core having an overlapping relationship with the fifth waveguide core.

6. The structure of claim 1 or claim 2 wherein the multimode interference structure includes a fourth waveguide core adjoined to a first portion of the second multimode interference region at a third acute angle and a fifth waveguide core adjoined to a second portion of the second multimode interference region at a fourth acute angle, the fourth waveguide core having an overlapping relationship with the first waveguide core, and the fifth waveguide core having an overlapping relationship with the second waveguide core.

7. The structure of one of claims 1 to 6 wherein the first multimode interference region comprises a first material, and the second multimode interference region comprises a second material different from the first material, and, optionally, wherein the first multimode interference region comprises silicon, and the second multimode interference region comprises silicon nitride.

8. The structure of one of claims 1 to 7 further comprising:
a semiconductor substrate;
a first dielectric layer on the semiconductor substrate; and
a second dielectric layer on the first dielectric layer,
wherein the first dielectric layer and the second dielectric layer are positioned between the second multimode interference region and the semiconductor substrate, and, optionally, wherein the second dielectric layer is positioned between the first multimode interference region and the second multimode interference region.

9. The structure of one of claims 1 to 8 wherein the second multimode interference region includes a longitudinal axis and a plurality of segments that are arranged along the longitudinal axis, and/or wherein the first multimode interference region includes a first longitudinal axis, and the second multimode interference region includes a second longitudinal axis that is oriented parallel to the first longitudinal axis.

10. The structure of one of claims 1 to 9 wherein the second multimode interference region includes a first subregion and a second subregion, and the first subregion is angled at a third acute angle relative to the second subregion.

11. The structure of claim 10 wherein the first multimode interference region includes a third subregion and a fourth subregion, and the third subregion is angled at a fourth acute angle relative to the second subregion, the first subregion overlaps with the third subregion, and the second subregion overlaps with the fourth subregion, wherein, optionally, the fourth acute angle is equal to the third acute angle.

12. The structure of claim 1 or claim 2 wherein the multimode interference structure includes a fourth waveguide core adjoined to a first portion of the second multimode interference region, and a fifth waveguide core adjoined to a second portion of the second multimode interference region, and, optionally, wherein the fourth waveguide core has an overlapping relationship with the first waveguide core, and the fifth waveguide core has an overlapping relationship with the second waveguide core.

13. The structure of claim 12 wherein the second multimode interference region has a sidewall, the fourth waveguide core adjoins the first portion of the second multimode interference region at the sidewall, the fifth waveguide core adjoins the second portion of the second multimode interference region at the sidewall, and the fourth waveguide core is spaced along the sidewall from the fifth waveguide core.

14. The structure of one of claims 1 to 13 wherein the first multimode interference region and the second multimode interference region are configured to split polarized light according to polarization mode.

15. A method of forming a structure for a polarization splitter, the method comprising:
forming a multimode interference structure including a first multimode interference region, a second multimode interference region, a first waveguide core adjoined to a first portion of the first multimode interference region at a first acute angle, a second waveguide core adjoined to a second portion of the first multimode interference region at a second acute angle, and a third waveguide core adjoined to a third portion of the first multimode interference region,
wherein the second multimode interference region has an overlapping relationship with the first multimode interference region.
